**Europäisches Patentamt**

**European Patent Office**

**Office européen des brevets**

(19)

(11) Veröffentlichungsnummer: **0 035 104**
**B1**

(12)

# EUROPÄISCHE PATENTSCHRIFT

(45) Veröffentlichungstag der Patentschrift:
**12.09.84**

(21) Anmeldenummer: **81100292.2**

(22) Anmeldetag: **16.01.81**

(51) Int. Cl.³: **C 08 K 9/04,** C 08 J 5/10 //
C08L21/00

(54) **Resorcin/Füllstoff-Präparation, Verfahren zur Herstellung und Verwendung derselben.**

(30) Priorität: **04.02.80 DE 3003934**

(43) Veröffentlichungstag der Anmeldung:
**09.09.81 Patentblatt 81/36**

(45) Bekanntmachung des Hinweises auf die Patenterteilung:
**12.09.84 Patentblatt 84/37**

(84) Benannte Vertragsstaaten:
**AT BE DE FR GB IT NL**

(56) Entgegenhaltungen:
**CH - A - 487 187**
**GB - A - 801 928**
**GB - A - 1 317 166**

(73) Patentinhaber: **Degussa Aktiengesellschaft,
Weissfrauenstrasse 9, D-6000 Frankfurt am Main 1 (DE)**

(72) Erfinder: **Kühner, Gerhard, Dr., Liesingstrasse 1,
D-6450 Hanau 9 (DE)**
Erfinder: **Wolff, Siegfried, Weiherstrasse 28,
D-5303 Bornheim-Merten (DE)**
Erfinder: **Rothbühr, Lothar, Dr., Volkerstrasse 10,
D-5030 Hürth-Hermühlheim (DE)**

## Beschreibung

Zur Verbesserung der Stabilität von vulkanisierten Kautschukformkörpern wie z.B. Reifen, Fördergurte, Förderbänder, Keilriemen, Schläuche u.dgl. gegen mechanische Verformung, werden diese bekanntlich mit Einlagen verstärkt. Solche Verbundkörper haben Einlagen aus Textilfasern oder Textilfasergebilden wie Gewebe oder Vliese, oder Metalldrähte bzw. Metalldrahtgebilde wie z.B. Stahlcord, die auch Überzüge wie z.B. aus Messing, Zink od.dgl. aufweisen können. Auch Glasfasern oder Glasfasergebilde wurden schon als Einlagenmaterialien verwendet.

Wichtig ist die feste Verankerung oder Haftung der Einlegematerialien mit dem Kautschukvulkanisat, damit eine gute Dauerhaltbarkeit der dynamisch beanspruchten Formkörper erreicht wird. So ist es bekannt, zur Erzielung einer hohen Haftung den Füllstoff Russ in der Kautschukmischung teilweise durch Kieselsäure-Füllstoff zu ersetzen (DE-PS 1 620 786). Weitere wesentliche Haftverbesserungen erzielt man bekanntlich dadurch, dass man den bekannten Kautschukmischungen zur Kunstharzbildung befähigte Komponenten wie Phenol und bzw. oder Amine und Aldehyde oder Aldehyde abspaltende Verbindungen hinzufügt. Eine breite Anwendung als Harzbildungskomponenten in Kautschukhaftmischungen finden Resorcin und Hexamethylentetramin (GB-PS 801 928, FR-PS 1 021 959), gegebenenfalls in Kombination mit Kieselsäure-Füllstoff (DE-AS 1 078 320).

Resorcin ist wegen seiner schlechten Dispergierbarkeit in Kautschukhaftmischungen schwierig zu verarbeiten. Daher werden meist leichter dispergierbare Abmischungen des Resorcins mit einem Kieselsäure-Füllstoff verwendet (DE-PS 1 301 478) wie z.B. das Handelsprodukt Cofill 11® der DEGUSSA, welches ein 1 : 1-Gemisch von Resorcin und einem bestimmten Kieselsäure-Füllstoff ist. In diesem Produkt liegt zwar das üblicherweise klumpen- bzw. schuppenförmige Resorcin in gleichmässig verteilter Form vor, aber das Produkt zeigt auch Nachteile. So kann es bei der Verarbeitung zu einer unerwünschten Staubentwicklung kommen.

Auch reduziert die Abmischung die Neigung des Resorcins zur Sublimation aus der Kautschukmischung heraus bei den üblichen Verarbeitungstemperaturen nur gerinfügig oder gar nicht, wodurch Absaugeanlagen zur Reinhaltung der Arbeitsluft erforderlich werden. Auch lassen leichte Dosierbarkeit und Rieselfähigkeit des pulverförmigen Produktes zu wünschen übrig.

Es war daher Aufgabe der Erfindung, eine resorcinhaltige Präparation aufzufinden, die in homogener Verteilung vorliegt, gut rieselfähig und dosierbar ist, vorzugsweise beim Wiegevorgang und Einmischen nicht staubt, in Kautschukmischungen gut dispergierbar ist und deren Resorcinanteil eine verringerte Sublimation zeigt, ohne dass darunter die Qualität der mit solchen Präparationen hergestellten Kautschukformkörper leidet, also insbesondere weder deren gummitechnische Eigenschaften noch insbesondere deren gute Hafteigenschaften zwischen Ein- oder Auflage und Vulkanisat vermindert werden.

Die Lösung der Aufgabe und damit die Erfindung ist in den Ansprüchen definiert.

Neben den beanspruchten Resorcin/Füllstoff-Präparationen werden auch die Verfahren zur Herstellung dieser Präparationen und deren Anwendung in Kautschuk-Haftmischungen beansprucht. Kautschuk-Haftmischungen sind im Sinne der vorliegenden Erfindung Mischungen auf Basis synthetischer und/oder natürlicher Kautschuke, die neben den üblichen Mischungsbestandteilen wie Schwefel, Beschleuniger, Füllstoffe, Weichmacher(öl), Alterungsschutzmittel, Oxidationsschutzmittel, Metalloxide, Stearinsäure u.dgl. bekannten Mischungsbestandteile noch insbesondere die mit Resorcin Harze bildenden aldehydische bzw. Aldehyde abspaltenden Verbindungen wie Hexamethylentetramin oder Paralformaldehyd enthalten. Die Haftmischungen werden bekanntlich zur besseren Haftung der daraus hergestellten Vulkanisationsprodukte an Metall-, Textiloder Glasfasergebilde bzw. -einlagen oder -auflagen eingesetzt.

Während der Russ aus praktischen bzw. ökonomischen Erwägungen in Pulverform eingesetzt wird, kann das Resorcin, wie oben beschrieben, in verschiedener Form eingesetzt werden. Es wurde gefunden, dass, wenn man die erfindungsgemässen Präparationen in der vorzugsweisen Perl- oder Granulatform erhalten möchte, das Resorcin mit einer mittleren Korngrösse zwischen etwa 0,10 und 0,40 mm vorliegen muss, bzw. zu diesen Korngrössen während des ersten Verfahrensschrittes, der mit a) bezeichnet ist, zerkleinert werden muss. Unter etwa 0,10 mm liegende Korngrössen behindern oder verhindern die Perl- bzw. Granulatbildung. Liegen die mittleren Korngrössen über etwa 0,40 mm, so werden keine gleichmässigen Perlen (in Grösse und Gestalt) bzw. keine entsprechenden Granulate erhalten.

Die Korngrössen werden durch Siebanalyse ermittelt, und die Auswertung der Siebanalyse gestattet die Berechnung der mittleren Korngrössen (siehe ASTM D 1511–74). Wie schon ausgeführt, kann in einer vorteilhaften Ausführungsform das Resorcin auch in flüssiger Form, d.h. in geschmolzenem Zustand, eingesetzt werden.

Das Gewichtsverhältnis von Russ zu Resorcin in der erfindungsgemässen Präparation kann in weiten Grenzen schwanken. So kann dieses Verhältnis als obere Grenze 95 zu 5 betragen. Aus Gründen der Praxis liegt das Russ/Resorcin-Gewichtsverhältnis vorzugsweise zwischen 70 zu 30 und 30 zu 70. Die untere Grenze kann gegebenenfalls noch unterschritten werden.

Herstellungsbeispiele
Beispiel 1
Die nachfolgend charakterisierten Ausgangsprodukte wurden eingesetzt:

| | Russ Nr. 1 | Russ Nr. 2 | Russ Nr. 3 | Kieselsäure-Füllstoff |
|---|---|---|---|---|
| mittlere Teilchendurchmesse [1]) in nm | 27 | 29 | 25 | 18 |
| spezifische Oberfläche [2]) in m²/g | 80 | 95 | 180 | 175 |
| DBP-Zahl [3]) in ml/100 g | 100 | 120 | 110 | 170 |
| flüchtige Bestandteile [4]) | 1,0 | 6,0 | 14,5 | – |
| Füllstofftyp | Furnace-russ | Gasruss | Gasruss | gefällte Kieselsäure |

[1]) elektronenmikroskopisch und mit Hilfe des Teilchengrössenanalysators TGZ3 der Firma Zeiss bestimmter mittlerer Wert
[2]) mit der Stickstoffadsorptionsmethode nach DIN 66 132 bestimmt
[3]) Dibutylphthalatabsorption nach DIN 53 601
[4]) nach DIN 53 552 bestimmt

3000 g des Russes Nr. 1 und 3000 g Resorcin wurden in einem hochtourigen Mischer bei 1400 Umdrehungen pro Minute (UpM) 5 Sekunden lang gemischt. Bei diesem kruzzeitigen Mischungsvorgang wurde das Resorcin, das vorher aus Plättchen von etwa 5 × 10 mm sowie aus Klumpen ähnlicher Grösse bestand, zusammen mit dem Russ unter Zerkleinerung des Resorcins in eine homogene Form umgewandelt. Die mittlere Korngrösse des Resorcins sank dabei auf 0,21 mm ab. Dieses Gemisch wurde dann in eine sogenannte Trockenperltrommel von zylindrischer Gestalt mit 2 Meter Durchmesser und einer Länge von 50 cm gegeben und darin bei einer Drehzahl von 12 UpM etwa 90 Minuten umgewälzt. Nach dieser Zeit wurde eine perlförmige Präparation (Präparation I) aus der Trommel entnommen.

In gleicher Weise wurden weitere perlförmige Präparationen stets im 1 : 1-Gemisch mit Resorcin hergestellt, und zwar mit Russ Nr. 2 die Präparation Nr. II und mit Russ Nr. 3 die Präparation Nr. III. Die wichtigsten Eigenschaften der hergestellten Präparationen I bis III und zum Vergleich des 1 : 1-Gemisches nach Stand der Technik (Cofill 11[R] der DEGUSSA) sind nachstehend zusammengefasst:

| Präparation Nr. | I | II | III | Gemisch nach Stand der Technik |
|---|---|---|---|---|
| Schüttdichte [1]) in g/l | 448 | 440 | 400 | 260 |
| Stampfdichte [2]) in g/l | 506 | 484 | 452 | 338 |

[1]) nach DIN 53 600 gemessen
[2]) nach DIN 53 194 bestimmt

Siebanalyse in Prozent

| Präparation Nr. | I | II | III |
|---|---|---|---|
| grösser als 1 mm | 10,4 | 13,2 | 17,8 |
| 0,7 bis 1,0 mm | 14,6 | 15,2 | 14,4 |
| 0,5 bis 0,7 mm | 14,4 | 16,0 | 16,6 |
| 0,25 bis 0,5 mm | 26,4 | 24,8 | 27,0 |
| 0,125 bis 0,25 mm | 20,0 | 16,8 | 14,0 |
| kleiner als 0,125 mm | 14,2 | 14,0 | 10,2 |
| Mittlere Korngrösse (in mm) | 0,51 | 0,56 | 0,62 |
| Rückstand nach dem Auswaschen des Resorcins mit heissem Wasser in Gewichtsprozent | 51,4 | 50,7 | 49,3 |

Die drei erfindungsgemässen Präparationen haben folgende vorteilhafte Eigenschaften. Sie stellen leicht rieselfähige, staubfreie Granulate dar und haben eine deutlich höhere Schüttdichte sowie Stampfdichte. Besonders die der Praxis entsprechenden Stampfdichten der erfindungsgemässen Präparationen im Bereich von 450 bis 500 g/l sind gegenüber dem Produkt nach Stand der Technik von 338 g/l auffallend günstiger.

Zum Nachweis eines weiteren wichtigen Vorteils der erfindungsgemässen Präparationen, nämlich der Verringerung der Sublimationsneigung des Resorcins in den Präparationen, wurden folgende Versuche durchgeführt.

Beispiel 2

Jeweils 10 g der Resorcin/Füllstoff-Präparationen gemäss Beispiel 1 und zum Vergleich des Produktes nach Stand der Technik wurden in eine flache Porzellanschale eingewogen und diese Proben 24 Stunden bei 8 verschiedenen, definierten Temperaturen erwärmt. Nach dem Abkühlen der Proben wurden diese zurückgewogen und der Gewichtsverlust in Prozent berechnet. Hierbei wurden folgende Ergebnisse für den Gewichtsverlust festgestellt:

| Sublimations-temperatur in °C | Gewichtsverlust in % für | | | |
|---|---|---|---|---|
| | Präpara-tion I | Präpara-tion II | Präpara-tion III | Produkt nach Stand der Technik |
| 50 | 0,23 | 0,48 | 0,79 | 1,2 |
| 60 | 0,38 | 0,94 | 1,3 | 1,8 |
| 70 | 0,47 | 1,0 | 1,5 | 1,9 |
| 80 | 0,93 | 1,6 | 2,2 | 2,8 |
| 90 | 1,3 | 2,1 | 2,6 | 3,8 |
| 100 | 2,5 | 3,6 | 4,5 | 5,3 |
| 110 | 3,3 | 4,2 | 5,0 | 7,2 |
| 150 | 16,8 | 20,2 | 16,8 | 29,4 |

Die erfindungsgemässen Präparationen zeigen deutlich günstigere Werte als das Produkt nach Stand der Technik, wobei die Präparation I bei allen Temperaturen die geringsten Gewichtsverluste aufweist, also am günstigsten abschneidet.

Beispiel 3

Um bei der Prüfung auf Sublimationsneigung den Einfluss von mitgeschlepptem Wasser auszuschliessen, wurden, wie im Beispiel 1 beschrieben, erneut 3 erfindungsgemässe Präparationen aus den 3 gleichen Russsorten hergestellt, wobei diese Russsorten jedoch vorgängig bei 125 °C getrocknet worden waren. Desgleichen wurde zum Vergleich auch ein Produkt nach Stand der Technik aus vorher ebenfalls auf gleiche Weise getrocknetem Kieselsäure-Füllstoff und Resorcin (1 : 1-Gemisch) hergestellt. Die Sublimationsprüfung erfolgte bei 70 °C. Die Prüfergebnisse zeigen wiederum eine deutliche Überlegenheit der erfindungsgemässen Präparationen:

Sublimationsverlust in Gewichtsprozent bei 70 °C

| | Präparation Nr. IV 1 : 1-Gemisch aus getrocknetem Russ Nr. 1 und Resorcin | Präparation Nr. V 1 : 1-Gemisch aus getrocknetem Russ Nr. 3 und Resorcin | Stand der Technik 1 : 1-Gemisch aus getrocknetem Kieselsäure-Füllstoff und Resorcin |
|---|---|---|---|
| nach 24 Stunden | 0,32 | 0,46 | 1,04 |
| nach 48 Stunden | 0,49 | 0,53 | 1,13 |
| nach 72 Stunden | 0,63 | 0,67 | 1,38 |
| nach 96 Stunden | 0,99 | 0,96 | 2,02 |
| nach 168 Stunden | 1,46 | 1,67 | 2,37 |

Beispiel 4

Eine weitere Variante bei der Herstellung der erfindungsgemässen Präparationen besteht darin, dass man nicht von dem festen, plättchenförmigen oder schuppigen Resorcin ausgeht, sondern dass man es durch Erhitzen zunächst verflüssigt. Erfahrungsgemäss erreicht es dabei Temperaturen um 120 °C. Dann werden 480 g des Russes Nr. 1, wie er im Beispiel 1 beschrieben ist, in einen hochtourigen Mischer mit propellerartigem Mischwerkzeug bei 500 UpM gegeben. Der Heizmantel des Mischers wird mit Heisswasser oder Brüdendampf von etwa 100 °C beschickt. Dann werden bei laufendem Mischer 520 g des flüssigen Resorcins hinzugegeben. Als Folge des nun stattfindenden intensiven Mischvorgangs bilden sich Perlen, deren Temperatur dabei so weit absinkt, dass sie nicht mehr kleben. Nach weiterer Abkühlung wird das Endprodukt erhalten. Die folgenden Eigenschaften dieses Produktes werden durch Siebanalyse und Bestimmung der Schütt- und Rütteldichte bestimmt.

Siebanalyse in Prozent

| | | | |
|---|---|---|---|
| grösser als 2 | mm | | 10,8 |
| 1,0 bis 2,0 | mm | | 50,8 |
| 0,7 bis 1,0 | mm | | 20,8 |
| 0,5 bis 0,71 | mm | | 12,6 |
| 0,25 bis 0,5 | mm | | 4,6 |
| 0,125 bis 0,25 | mm | | 0,2 |
| kleiner als 0,125 mm | | | 0,2 |
| mittlere Korngrösse (in mm) | | | 1,30 |
| Schüttdichte (DIN 53 600) | | | 680 g/l |
| Stampfdichte (DIN 53 194) | | | 780 g/l |

Man erhält auf diese Weise Präparationen mit besonders hohen Schüttdichten. Es wird angenommen, dass diese hohen Schüttdichten deshalb erzielt werden, weil das flüssige Resorcin in die durch den Russ gebildeten Hohlräume eindringen kann und dort fixiert wird.

Die Herstellungsvariante dieses Beispiels kann auch kontinuierlich ausgeführt werden, wobei beispielsweise Russperlmaschinen, wie sie in der DE-PS 2 147 503 beschrieben sind, mit Vorteil zur Anwendung kommen können.

Beispiel 5

Wird anstelle des im Beispiel 1 beschriebenen zweiten Behandlungsschrittes in der Trockenperltrommel eine Vermahlung der Vormischung ausgeführt, so erhält man zwar eine optimale Verteilung des Resorcins auf der Russoberfläche, aber die Mahlung verursacht eine starke Auflockerung des Produktes, das nunmehr ein sehr niedriges, also ungünstiges Schüttgewicht aufweist.

Um solchen Nachteil zu vermeiden, wurde folgende Herstellungsvariante gefunden.

Das Resorcin, das in Schuppen von 5 × 10 mm sowie in Klumpenform vorliegt, wurde in einer Stiftmühle auf eine mittlere Korngrösse 0,17 mm gemahlen, wobei der Anteil an Resorcin der Korngrösse kleiner als 0,125 mm 33% betrug. 3000 g dieses feingemahlenen Resorcins wurden mit 3000 g des Russes Nr. 1 aus Beispiel 1 in einem hochtourigen Mischer gemischt. Die Mischzeit betrug 7 Sekunden (und soll im allgemeinen zwischen 5 und 10 Sekunden liegen) und die Umdrehungszahl des Mischwerkzeuges lag bei 1400 UpM. Nach Entnahme dieser Präparation aus dem Mischgerät wies sie folgende Prüfwerte auf:

Schüttdichte 301 g/l
Stampfdichte 375 g/l.

Diese Werte der erfindungsgemässen pulverförmigen Präparation übertreffen noch die Werte des Gemisches nach dem Stand der Technik gemäss Beispiel 1.

Die erfindungsgemässen Präparationen finden, mit technischen Vorteilen verbunden, in sogenannten Kautschukhaftmischungen Verwendung; das sind Kautschukmischungen, die in vulkanisiertem Zustand an Ein- oder Auflagen aus 1.) Textilgebilden wie Fasern, Fäden, Drähte, Garne, Gewebe, Gewirke u.dgl. aus Textilfasern von natürlicher oder synthetischer Herkunft, 2.) aus Metall- und insbesondere Stahlgebilden oder 3.) aus Glas, insbesondere Silikatglas besonders fest haften. Zu den genannten Fasern, Fäden, Drähten usw. rechnen insbesondere Syntehseerzeugnisse aus Polyestern wie z.B. Polyäthylenglykolterephthalat, aus Polyamiden wie z.B. Polyamid-6, Polyamid-6.6, Polyamid-6.10, Polyamid-11 und Polyamid-12, ferner aus Polyaramiden wie z.B. Poly-p- und/oder -m-phenylenterephthal- oder isophthalamid und aus Celluloseregenerat (Viscose). Zu den Metallgebilden zählen vorzugsweise Metalldrähte und insbesondere blanker, vermessingter oder verzinkter Stahlcord.

Welche guten Haftwerte sich mit Vulkanisaten aus Kautschukmischungen, die unter Verwendung der erfindungsgemässen Präparationen hergestellt worden sind, erzielen lassen, zeigen die folgenden Beispiele.

Anwendungsbeispiele

A) Die folgenden vier Kautschukmischungen wurden aus den angegebenen Mischungsbestandteilen hergestellt und zur Haftprüfung verwendet. Mengenangaben in Gewichtsteilen. Die Mischung Nr. 4 ist die Vergleichsmischung.

| Bestandteile | Mischung Nr. | | | |
|---|---|---|---|---|
| | 1 | 2 | 3 | 4 |
| Naturkautschuk [1]) | 30 | 30 | 30 | 30 |
| Polyio-Sprenkautschuk [2]) | 70 | 70 | 70 | 70 |
| Stearinsäure | 1 | 1 | 1 | 1 |
| Poly-2,2,4-trimethyl-1,2-dihydrochinolin | 1 | 1 | 1 | 1 |
| Weichmacheröl, hocharomatisch Stockpunkt ± 0 °C | 4 | 4 | 4 | 4 |
| HAF-Russ N 330 [+]) | 45 | 45 | 45 | 45 |
| granulierter, aktiver, gefällter Kieselsäure-Füllstoff [3]) [+]) | 15 | 15 | 15 | 12,5 |
| Zinkoxid | 6 | 6 | 6 | 6 |
| Bleioxid | 2 | 2 | 2 | 2 |
| Präparation Nr. I von Beispiel 1 | 5 | – | – | – |
| Präparation Nr. II von Beispiel 1 | – | 5 | – | – |

(Fortsetzung)

| Bestandteile | Mischung Nr. | | | |
|---|---|---|---|---|
| | 1 | 2 | 3 | 4 |
| Präparation Nr. III von Beispiel 1 | – | – | 5 | – |
| Gemisch nach Stand der Technik (siehe Beispiel 1) [+]) | – | – | – | 5 |
| Benzothiazyl-2-dicyclohexyl-sulfenamid | 0,7 | 0,7 | 0,7 | 0,7 |
| Hexamethylentetramin mit 3% $SiO_2$-Gehalt [+]) | 1,5 | 1,5 | 1,5 | 1,5 |
| Schwefel, unlöslicher | 4 | 4 | 4 | 4 |

[+]) Hersteller: Degussa, Postfach 2644, D 6000 Frankfurt/Main 1.
[1]) Ribbed smoked sheets No. 1; 60 Mooney L 4 (100°C); 0,2% Zinkpentachlorthiophenat-Gehalt
[2]) Mit 98–99% cis-1,4-Gehalt
[3]) Mittlere Primärteilchengrösse 18μm; spezifische Oberfläche (DIN 66 132) 175 m²/g (Ultrasil® VN 3 der Degussa).

Die vier Kautschukmischungen wurden dann in Anlehnung an die ASTM-Norm D 2229-73 zusammen mit bzw. an vermessingtem Stahlcord vulkanisiert und geprüft. Dabei wurden folgende Prüfbedingungen gewählt.

Konstruktion des vermessingten Stahlcords: 7 × 3 × 0,15 mm.
Einbettlänge des Stahlcords im Gummi: 1 cm.
Spezifischer Pressendruck: 1 kN/cm².
Vulkanisationstemperatur: 145°C.
Vulkanisationszeit: 100 Minuten.

Es wurde mit einer Zugprüfmaschine nach DIN 51 221, Blatt 3, geprüft.

Geschwindigkeit beim Herausziehen des Stahlcords (pull out test): 100 mm/Minute.

Die Zugkraft, die erforderlich war, um den Stahlcord aus dem Prüfkörper herauszuziehen, wurde gemessen und aus 10 Messungen der Mittelwert errechnet.

In der folgenden Tabelle sind die zehn Messergebnisse und der Mittelwert in N/cm festgehalten.

Tabelle 1

| | Vulkanisat, enthaltend | | | |
|---|---|---|---|---|
| | Präparation I | Präparation II | Präparation III | Zum Vergleich: Gemisch nach Stand der Technik |
| | 390 | 360 | 340 | 340 |
| | 390 | 380 | 340 | 350 |
| | 320 | 380 | 350 | 350 |
| | 400 | 390 | 340 | 300 |
| | 400 | 390 | 320 | 370 |
| | 350 | 330 | 320 | 310 |
| | 300 | 270 | 260 | 350 |
| | 360 | 300 | 370 | 390 |
| | 360 | 330 | 300 | 390 |
| | 380 | 280 | 340 | 370 |
| Mittelwert | 365 | 341 | 328 | 352 |

Da die Ergebnisse dieser praxisnahen Haftprüfung eine nicht unwesentliche Schwankungsbreite aufweisen, kann ausgesagt werden, dass die Vulkanisate aus den Kautschukmischungen, die die erfindungsgemässen Präparationen enthalten, mindestens gleich gute Haftfestigkeiten ergeben, wie diejenigen nach Stand der Technik. In der Tendenz zeigt die Haftprüfung mit der Präparation I die besten Werte.

B) Die folgenden zwei Kautschukmischungen wurden aus den angegebenen Mischungsbestandteilen hergestellt und zur Haftprüfung an Textilgeweben verwendet. Mengenangaben wieder in Gewichtsteilen. Die Vergleichsmischung ist die Mischung Nr. 6.

| Bestandteile | Mischung Nr. | |
|---|---|---|
| | 5 | 6 |
| Naturkautschuk [1]) | 50 | 50 |
| Naturkautschuk [2]) | 50 | 50 |
| Stearinsäure | 3 | 3 |
| Poly-2,2,4-trimethyl-1,2-dihydrochinolin | 1 | 1 |
| Weichmacheröl, hocharomatisch Stockpunkt $\pm$ 0 °C | 7 | 7 |
| GPF-Russ N 660 [+]) | 27 | 30 |
| granulierter, aktiver, gefällter Kieselsäure-Füllstoff [3]) [+]) | 15 | 12 |
| Zinkoxid | 6 | 6 |
| Präparation Nr. I von Beispiel 1 | 6 | – |
| Gemisch nach Stand der Technik (siehe Beispiel 1) [+]) | – | 6 |
| Benzothiazyl-2-cyclohexyl-sulfenamid | 1 | 1 |
| Hexamethylentetramin mit 3% $SiO_2$-Gehalt [+]) | 1,5 | 1,5 |
| Schwefel, unlöslicher | 2,5 | 2,5 |

[+]) Hersteller: Degussa, Postfach 2644, D 6000 Frankfurt/Main 1.
GPF = General Purpose Furnace (Black).
[1]) Ribbed smoked sheets No. 1; 60 Mooney L 4 (100 °C); 0,2% Zinkpentachlorthiophenat-Gehalt
[2]) Brown Crepe; 60 Mooney L 4 (100 °C); 0,2% Zinkpentachlorthiophenat-Gehalt.
[3]) Mittlere Primärteilchengrösse 18μm; spezifische Oberfläche (DIN 66 132) 175 m²/g (Ultrasil® VN 3 der Degussa).

Die beiden Kautschukmischungen wurden dann jeweils zusammen mit bzw. an einem Gewebe aus Polyäthylenglykolterephthalat (Trevira® EP) von 550 g Quadratmetergewicht aus Fäden der Stärke, gemessen in dtex, in der Kette von 1100 × 3 und im Schuss von 940 × 3 und einer Fadenzahl von 116 pro 10 cm in der Kette und 45 pro 10 cm im Schuss bei 145 °C 25 Minuten lang in einer Presse bei einem Druck von 1,4 kN/cm² vulkanisiert und der Verbund auf Haftung geprüft (Textilhaftprüfung gemäss DIN 53 530). Das verwendete Gewebe war nicht imprägniert bzw. nicht präpariert.

Gemessen wird jeweils die Trennkraft, die benötigt wird, um die Gewebeauflage von dem 2,5 cm breiten Probestreifen aus Gummi abzuziehen. Dabei wurde die vorgeschriebene Zugprüfmaschine nach DIN 51 221, Blatt 3, benutzt, und es wurden Minimum- und Maximumwerte der Kraftanzeigen bei den einzelnen Phasen des Trennungsvorganges des Gewebes vom Gummi in N gemessen, wobei sich folgende Werte ergaben.

Tabelle 2

| Vulkanisat, enthaltend: | |
|---|---|
| Präparation (aus Mischung 5) | Zum Vergleich: Gemisch nach Stand der Technik (aus Mischung 6) |
| 1.   200 → 270 | 180 → 240 |
| 2.   220 → 300 | 180 → 260 |

Die Prüfergebnisse zeigen, dass die Haftfestigkeiten der Gewebe an Gummi günstige Werte zeigen und denen nach Stand der Technik überlegen sind.

Insgesamt lässt sich aus den Beispielen entnehmen, dass die erfindungsgemässen Präparationen deutliche technische Fortschritte gegenüber dem Stand der· Technik erbringen: Es sind dies sowohl die bessere Rieselfähigkeit und Dosierbarkeit der erfindungsgemässen Produkte als auch die Eigenschaft nicht zu stauben. Die Verminderung der Sublimationsneigung ist ein weiterer wichtiger Vorteil. Auch in der Haftwirkung und in den gummitechnischen Eigenschaften sind mindestens Tendenzen zu bessern Prüfwerten zu erkennen. Die bevorzugte Ausführungsform der vorliegenden Erfindung (Präparation I gemäss Beispiel 1) ist auch diesbezüglich dem Stand der Technik gegenüber als fortschrittlich zu bezeichnen.

Die erfindungsgemässen Präparationen finden in Kautschukhaftmischungen Verwendung zur Herstellung von Fahrzeugreifen jeglicher Art, insbesondere von Luftreifen, zur Reifenrunderneuerung, zur Herstellung von Fördergurten, Transportbändern, technischen Schläuchen wie z.B. Feuerwehrschläuche und Druckluftschläuche, ferner von gummierten Geweben, Containern, Schuhen, Campingartikeln, Booten, Keilriemen und anderen technischen Formartikeln, die sämtlich Verbundkörper aus Gummi und den genannten Ein- oder Auflagen darstellen.

**Patentansprüche**

1. Resorcin/Füllstoff-Präparation, dadurch gekennzeichnet, dass sie aus Resorcin und mindestens einem Russ in gleichmässiger Verteilung miteinander besteht.

2. Präparation nach Anspruch 1, dadurch gekennzeichnet, dass sie in Perl- oder Granulatform vorliegt.

3. Präparation nach den Ansprüchen 1 und 2, dadurch gekennzeichnet, dass sie als Russ Furnaceruss mit einer durch Stickstoffadsorption (DIN 66 123) gemessenen spezifischen Teilchenoberfläche von etwa 40 bis 120 m²/g, einer elektronenmikroskopisch ermittelten mittleren Primärteilchengrösse von 20 bis 45 nm und einer Dibutylphthalatabsorption (DIN 53 601) von 45 bis 130 ml/100 g in einer Menge von 30 bis 70 Gewichtsteilen

auf die jeweils zu 100 ergänzte Menge von 70 bis 30 Gewichtsteilen Resorcin enthält.

4. Präparation nach den Ansprüchen 1 und 2, dadurch gekennzeichnet, dass sie als Russ Furnaceruss mit einer durch Stickstoffadsorption (DIN 66 132) gemessenen spezifischen Teilchenoberfläche von etwa 75 bis 85 m²/g, einer elektronenmikroskopisch ermittelten mittleren Primärteilchengrösse von 24 bis 30 nm und einer Dibutylphthalatabsorption (DIN 53 601) von 75 bis 110 ml/100 g in einer Menge von 50 Gewichtsteilen auf 50 Gewichtsteile Resorcin enthält.

5. Verfahren zur Herstellung der Resorcin/Füllstoff-Präparationen nach den Ansprüchen 1 bis 4, dadurch gekennzeichnet, dass man a) Resorcin in Form der üblichen Plättchen oder ähnlicher Gestalt und den Russ in Pulverform einige Sekunden lang in einer hochtourigen Mischvorrichtung mischt und b) vorzusweise in einer anderen langsam laufenden Mischvorrichtung das entstandene Produkt zu einer im wesentlichen perlförmigen Gestalt annehmenden Präparation verarbeitet, mit der Massgabe, dass zur Erzielung der Perl- oder Granulatform der Präparation bei dem Verfahrensschritt a) das Resorcin auf eine mittlere Korngrösse von 0,10 bis 0,40 mm abgebaut wird bzw. wenn das Resorcin bereits als Pulver mit den genannten mittleren Korngrössen vorliegt und eingesetzt wird, nur eine kurzzeitige Behandlung in der hochtourigen Mischvorrichtung vorgenommen oder nur der Verfahrensschritt b) ausgeführt wird.

6. Verfahren nach Anspruch 5, dadurch gekennzeichnet, dass der Verfahrensschritt b) in einem geschlossenen zylindrischen Gefäss von etwa 2 Meter innerem Durchmesser bei einer Drehzahl zwischen 10 und 20 Umdrehungen pro Minute bei einer Verweilzeit von 1 bis 5 Stunden ausgeführt wird.

7. Verfahren nach Anspruch 5, dadurch gekennzeichnet, dass der Verfahrensschritt b) in der Drehtrommel einer Trockenperlvorrichtung ausgeführt wird.

8. Verfahren zur Herstellung der Resorcin/Füllstoff-Präparationen nach den Ansprüchen 1 bis 4, dadurch gekennzeichnet, dass man den Russ in einer Mischvorrichtung, die zu hochtourigem Lauf befähigt, mit Heiz- sowie gegebenenfalls Kühleinrichtung und mit einem propeller- oder stachelartigen Mischwerkzeug ausgerüstet ist, vorlegt, das Resorcin durch Erhitzen verflüssigt, das flüssige Resorcin portionsweise oder kontinuierlich in die schnellaufende aufgeheizte Mischvorrichtung einfliessen lässt, den Vorgang zur Bildung der Präparation somit einleitet, weiterführt und bis zur Perlbildung vervollständigt und die Perlen bis zu ihrer Klebefreiheit in der laufenden Mischvorrichtung abkühlt oder abkühlen lässt.

9. Verwendung der Resorcin/Füllstoff-Präparationen nach den Ansprüchen 1 bis 4 in Kautschukhaftmischungen zu besseren Haftung von Kautschukvulkanisaten an Metall-, an Textil- oder an Glasfasergebilden.

## Claims

1. A resorcinol/filler preparation, characterised in that it consists of resorcinol and at least one carbon black in a uniform distribution with each other.

2. A preparation according to claim 1, characterised in that it is in bead or granulate form.

3. A preparation according to claims 1 and 2, characterised in that it contains as carbon black furnace carbon black having a specific particle surface of from about 40 to 120 m²/g which is measured by means of nitrogen absorption (DIN 66 123), an average primary particle size of from 20 to 45 nm which was determinded by using an electron microscope and a dibutylphthalate absorption (DIN 53 601) of from 45 to 130 ml/100 g in a quantitiy of from 30 to 70 parts, by weight, with respect to the quantity of from 70 to 30 parts, by weight, of resorcinol, which is made up in each case to 100.

4. A preparation according to claims 1 and 2, characterised in that it contains as carbon black furnace carbon black having a specific particle surface of from about 75 to 85 m²/g which is measured by means of nitrogen absorption (DIN 66 132), an average primary particle size of from 24 to 30 nm which is determined by using an electron microscope and a dibutylphthalate absorption (DIN 53 601) of from 75 to 110 ml/100 g in a quantity of 50 parts, by weight, to 50 parts, by weight, of resorcinol.

5. A process for the production of the resorcinol/filler preparations according to claims 1 to 4, characterised in that a) resorcinol in the form of conventional lamina or similar shapes and the carbon black in powder form are mixed for several seconds in a high-speed mixing apparatus and b) the resulting product is preferably treated in another slowly running mixing apparatus to produce a preparation which adopts a substantially bead-shaped form, on condition that in stage a) of the process the resorcinol is decomposed to an average grain size of from 0.10 to 0.40 mm, or if the resorcinol is already in powder form and has the above mentioned average grain size and is used as such, only a short treatment in the high-speed mixing apparatus is carried out or only stage b) of the process is carried out to obtain the bead or granulate form of the preparation.

6. A process according to claim 5, characterised in that stage b) of the process is carried out in a sealed cylindrical container having an interior diameter of about 2 metres at a rotational speed of from 10 to 20 r.p.m. at a residence time of from 1 to 5 hours.

7. A process according to claim 5, characterised in that stage b) of the process is carried out in the rotary drum of a dry beading apparatus.

8. A process for the prodcution of the resorcinol/filler preparations according to claims 1 to 4, characterised in that the carbon black is placed in a mixing apparatus, which is capable of operating at high speed, and has a heating device or optionally a cooling device and has a propeller-like or spine-like mixing tool, the resorcinol is reduced by heating into a fluid stage, the liquid resorcinol is allowed to flow in portions or continuously into the high-speed heated mixing apparatus, the process for forming the preparation is thus initiated, continued and carried out until beads are formed and the beads are cooled or allowed to cool in the running mixing apparatus until they are no longer tacky.

9. The use of the resorcinol/filler preparations according to claims 1 to 4 in rubber adhesive mixtures for the improved adhesion of rubber vulcanisates on metal, textile or glass fibre formations.

## Revendications

1. Préparation de résorcine-charge caractérisée en ce qu'elle est constituée de résorcine et d'au moins un noir de carbone, en répartition homogène l'une dans l'autre.

2. Préparation selon la revendication 1, caractérisée en ce qu'elle se présente sous la forme de perles ou de granules.

3. Préparation selon l'une des revendications 1 et 2, caractérisée en ce que comme noir de carbone, elle contient un noir de carbone du type dit furnace avec une surface spécifique des particules mesurée par adsorption d'azote (DIN 66 123) d'environ 40 à 120 m²/g, une dimension moyenne des particules primaires, déterminée au microscope électronique, de 20 à 45 nm, et une absorption de dibutylphtalate (DIN 53 601) de 45 à 130 ml/ 100 g, dans une proportion de 30 à 70 parties en poids toujours complétées à 100 par 70 à 30 parties en poids de résorcine.

4. Préparation selon les revendications 1 et 2, caractérisé en ce que comme noir de carbone, elle contient un noir de carbone du type dit «furnace», avec une surface spécifique des particules mesurée par adsorption d'azote (DIN 66 132) d'environ 75 à 85 m²/g, une dimension moyenne des particules primaires déterminée au microscope électronique, de 24 à 30 nm, et une absorption de dibutylphtalate (DIN 53 601) de 75 à 100 ml/100 g, dans une proportion de 50 parties en poids pour 50 parties en poids de résorcine.

5. Procédé de fabrication des préparations de résorcine-charge selon les revendications 1 à 4, caractérisé en ce que a) on mélange la résorcine sous la forme habituelle de plaquettes ou sous une forme similaire, et le noir de carbone sous forme pulvérulente, pendant quelques secondes, dans un appareil mélangeur à grande vitesse, et b) on transforme le produit obtenu, de préférence dans un autre appareil mélangeur à petite vitesse, en une préparation présentant une forme essentiellement perlée, avec cette condition, que pour obtenir la forme de perles ou de granules de la préparation, dans l'étape a), la résorcine soit réduite à une dimension moyenne des grains de 0,10 à 0,40 mm, ou, si la résorcine se présente déjà sous forme de poudre avec la dimension moyenne des grains mentionnée, et qu'elle est mise en œuvre sous cette forme, on n'effectue qu'un traitement de courte durée dans le mélangeur à grande vitesse, ou que l'on passe directement à l'étape b).

6. Procédé selon la revendication 5, caractérisé en ce que l'étape b) est effectuée dans un tambour cylindrique fermé d'environ 2 m de diamètre intérieur, à une vitesse de rotation de 10 à 20 tours par minute, avec une durée de séjour de 1 à 5 heures.

7. Procédé selon la revendication 5, caractérisé en ce que l'étape b) est effectuée dans le tambour rotatif d'un dispositif de perlage à sec.

8. Procédé de fabrication des préparations de résorcine-charge selon les revendications 1 à 4, caractérisé en ce que l'on introduit le noir de carbone dans un appareil mélangeur à grande vitesse, muni de dispositifs de chauffage, et éventuellement de refroidissement, et d'un outil mélangeur en forme d'hélice ou à pointes, on liquéfie la résorcine par chauffage, introduit la résorcine liquide, par portions ou en continu, dans l'appareil mélangeur à grande vitesse, chauffé, que l'on induit ainsi l'opération de formation de la préparation; la poursuit et la complète jusqu'à la formation des perles, et que l'on refroidit, ou laisse refroidir, les perles dans l'appareil mélangeur jusqu'à ce qu'elles ne soient plus collantes.

9. Utilisation des préparations de résorcine-charge selon l'une des revendications 1 à 4 dans des mélanges d'adhérence de caoutchoucs pour améliorer l'adhérence des vulcanisats de caoutchouc sur les structures métalliques, textiles ou en fibres de verre.